(19) Europäisches Patentamt
European Patent Office
Office européen des brevets

(11) EP 3 071 424 B1

(12) **EUROPEAN PATENT SPECIFICATION**

(45) Date of publication and mention of the grant of the patent:
**26.05.2021 Bulletin 2021/21**

(21) Application number: **14809229.9**

(22) Date of filing: **20.11.2014**

(51) Int Cl.:
***B60C 9/18*** *(2006.01)* ***C08G 18/48*** *(2006.01)*
***C08G 18/76*** *(2006.01)* ***C08G 18/10*** *(2006.01)*
***C09D 175/04*** *(2006.01)* ***C08G 18/32*** *(2006.01)*

(86) International application number:
**PCT/US2014/066582**

(87) International publication number:
**WO 2015/077438 (28.05.2015 Gazette 2015/21)**

(54) **POLYURETHANE SUPPORT FOR NON-PNEUMATIC TIRE**
POLYURETHANTRÄGER FÜR NICHTPNEUMATISCHE REIFEN
SUPPORT EN POLYURÉTHANE POUR BANDAGE NON-PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2013 US 201361907422 P**

(43) Date of publication of application:
**28.09.2016 Bulletin 2016/39**

(73) Proprietor: **Compagnie Générale des Etablissements Michelin**
**63000 Clermont-Ferrand (FR)**

(72) Inventors:
- **PARFONDRY, Alain**
**Greenville, SC 29605 (US)**
- **DOTSON, Michael E.**
**Greenville, SC 29605 (US)**
- **BOHN, Clayton C.**
**Greenville, SC 29605 (US)**
- **DELFINO, Antonio**
**Greenville, SC 29605 (US)**

(74) Representative: **Casalonga**
**Casalonga & Partners**
**Bayerstraße 71/73**
**80335 München (DE)**

(56) References cited:
**EP-A2- 0 334 522**
**WO-A1-2011/112920**
**US-A1- 2004 159 385**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 071 424 B1

## Description

### BACKGROUND OF THE INVENTION

### Field of the Invention

This invention relates generally to non-pneumatic tires having at least a portion formed of a polyurethane material.

### Description of the Related Art

Non-pneumatic flexible wheels or tires are well known to the person skilled in the art. Such tires or wheels are supported not by conventional air pressure but rather through structure. For example, U.S. Patent No. 7,201,194, which is fully incorporated herein by reference, discloses a structurally supported, non-pneumatic tire having (1) an annular band that supports the load, (2) a wheel or hub and (3) a plurality of web spokes that transmit in tension the load forces between the annular band and the wheel or hub. The tire supports its load solely through the structural properties and, contrary to the mechanism in pneumatic tires, without support from internal air pressure.

At least a portion of the support structure is known to be made from polyurethane. Polyurethane is a specialty polymer that is used in a wide variety of commercial applications including, for example, rigid or flexible foams, elastomers, coatings, adhesives and sealants. The chemistry of polyurethane makes use of the reaction of an isocyanate (-N=C=O) with an active hydrogen component, *e.g.*, (R-OH) or ($R\text{-}NH_2$), to produce the class of polymers known as polyurethane, which includes the group of polyurethane-urea polymers that are the reaction product of the isocyanate with the amine active hydrogen component.

### SUMMARY OF THE DISCLOSURE

Particular embodiments disclosed herein include non-pneumatic tires having a support structure that includes an outer reinforced annular band, a hub and a set of supports extending between the hub and radially inward from the outer reinforced annular band. The support structure is formed at least in part of a polyurethane that is a reaction product of components that include a prepolymer comprising a reaction product of an aromatic diisocyanate monomer and an active hydrogen component selected from a polyol, a polyamine or combinations thereof, the aromatic diisocyanate monomer and the active hydrogen component mixed at a ratio of NCO to the isocyanate-reacting functional groups of at least 1.8:1, wherein the polyol active hydrogen component has a number average molecular weight of between 1000 and 6000 and wherein the prepolymer contains no more than 10 wt% of residual aromatic diisocyanate monomer. The reaction components also include a curative.

Furthermore it may be that the NCO content of the prepolymer is between 2 wt% and 6 wt% and/or that a direct path between the two isocyanate moieties of the aromatic diisocyanate monomer molecule includes only aromatic ring members.

### BRIEF DESCRIPTION OF THE DRAWINGS

FIG. **1** is a schematic view of an exemplary structurally supported, non-pneumatic tire.

FIGS. **2A-E** are schematic views of exemplary structural arrangements in a structurally supported, non-pneumatic tire.

### DETAILED DESCRIPTION OF PARTICULAR EMBODIMENTS

Embodiments of the present invention include non-pneumatic tires having a support structure formed at least in part of a polyurethane material. It is the support structure of the non-pneumatic tire that replaces the support typically provided by air pressure in a pneumatic tire. Just as in a pneumatic tire, it is desirable to reduce the rolling resistance and to increase the longevity of non-pneumatic tires, both of these properties being among those valued by consumers. It has been found that significant improvements can be made to both the rolling resistance and the longevity of non-pneumatic tires by utilizing the polyurethane materials disclosed herein for at least a portion of their support structures.

In particular embodiments, the polyurethane used to form at least a part of the support structure is a reaction product of components that include a prepolymer and a chain extender or curative. By using a prepolymer, the manufacturer has greater control over the structure, properties and finished product quality than if the manufacturer uses a

one-shot process, wherein all the reactants are mixed at once. The prepolymer may be made by mixing one or more fairly long-chained active hydrogen components, for example fairly long-chained polyols and/or polyamines, with an excess of the diisocyanate material to provide a reaction product that is an intermediary between the monomers and the final polyurethane product. Then to make the final polyurethane product, the prepolymer is mixed with a chain extender or curative, such as a diol and/or a diamine, to form the final reaction product having a desired high molecular weight.

The prepolymer reaction product of particular components that include the diisocyanate and the polyol/polyamine provides the prepolymer chains that have an isocyanate (-NCO) moiety on each chain end. These isocyanate moieties then react with the curative that is mixed into the prepolymer to provide the final polyurethane material. The prepolymer chains form the long-chained or soft sections of the polyurethane material and the curative, together with the isocyanate moieties, form the short-chained or hard sections of the polyurethane material. It is the combination of these soft sections and hard sections that provide the resulting segmented polyurethane with its desired elastomeric properties. Choosing suitable reaction products in suitable proportions helps provide the elastomeric polyurethane having the desired properties. Elastomeric materials, as is known, are those that can be stretched repeatedly at room temperature and upon immediate release, will return to their approximate original length.

It is desirable in particular embodiments of the polyurethane materials disclosed herein to control the quantity and quality of the soft and hard segment content of the resulting polyurethane product. One way of providing that control is to limit the amount of unreacted diisocyanate monomer that remains in the prepolymer. Since the prepolymer is made with an excess of the diisocyanate, there remains some percentage of unreacted diisocyanate monomer in the prepolymer after all of the polyol has been reacted. The amount of such unreacted diisocyanate monomer in the prepolymer, known as the residual diisocyanate monomer content, may be expressed as its weight percent of the total weight of the prepolymer.

For example if one mole of polytetramethylene ether glycol (PTMEG) having a number average molecular weight of 2000 is mixed into two moles of p-phenylene diisocyanate (PPDI) having a MW of 160, then theoretically, assuming no side reactions took place, one mole or 160 g of unreacted PPDI would remain in the prepolymer as residual diisocyanate monomer content. The total weight of the prepolymer would be 2320 g (assuming no other ingredients were added to the reactive mixture) so that the residual diisocyanate monomer content would theoretically be 6.9 wt% of the total weight of the prepolymer. In reality, however, given the statistical law for polycondensation (Flory's law), e.g., with a diisocyanate molecule reacting with both of its NCO groups instead of just one, forming a 3:2 adduct instead of a 2:1 adduct, etc., then less unreacted diisocyanate monomer will remain in the prepolymer than the theoretical amount.

Particular embodiments of the polyurethane material disclosed herein are manufactured with a prepolymer having a low residual diisocyanate monomer content to help control its resulting physical properties. If the residual diisocyanate monomer content is too great, then the resulting distribution of hard and soft block segments in the polyurethane product becomes more random and disordered since the unreacted residual monomer will react with the curative when it is added to the prepolymer. With a lower residual diisocyanate monomer content, the resulting hard and soft segment distribution is more ordered providing improved properties to the polyurethane product.

It may be noted that higher levels of residual diisocyanate monomer content often do not have a negative effect on products made from such polyurethanes. However, it has been discovered that particular embodiments of a non-pneumatic tire having improved rolling resistance and longevity characteristics may be obtained when at least a part of its support structures are manufactured from particular polyurethane materials formed from a prepolymer having a low residual diisocyanate content.

Therefore particular embodiments of the polyurethane materials and non-pneumatic tire support structures made from such materials disclosed herein provide that such polyurethanes are the reaction product of a prepolymer having a residual diisocyanate monomer content of no more than 10 wt% or alternatively, no more than 8 wt%, no more than 6 wt% or no more than 5 wt%. Alternatively, the residual diisocyanate monomer content may be between 0.05 wt% and 4 wt%, between 0.05 wt% and 3 wt%, between 0.1 wt% and 2 wt%, between 0.1 wt% and 1 wt%, between 1 wt% and 5 wt%, between 1 wt% and 4 wt%, between 2 wt% and 5 wt% and between 3 wt% and 4 wt%.

In many prepolymer systems the residual diisocyanate monomer content in the prepolymer may be at least as high as about 25 wt%. To reduce this residual content and obtain low levels of residual diisocyanate monomer in the prepolymer, the prepolymer may be subjected to distillation to remove the residual monomer in, *e.g.,* an agitated film evaporator under vacuum, as is well known in the industry. While such distillation methods are useful for producing a prepolymer with low residual diisocyanate monomer content, even as low as less than 0.1 wt% for some prepolymer systems, such distillation methods lose some of their usefulness if the vapor pressure of the monomer is too low to effectively distill the monomer from the prepolymer.

Alternatively or in addition to such distillation methods, the residual diisocyanate monomer content may be limited during the manufacturing process by (1) reducing the NCO/OH ratio of the reaction components, *i.e.,* reducing the excess of diisocyanate in the reaction mix; (2) selecting diisocyanate monomers that can react with the polyol/polyamine without excess side reactions, and/or (3) controlling reaction conditions such as reaction temperature and

rate of reaction component mixing.

In particular embodiments of the polyurethane material disclosed herein, the diisocyanate is an aromatic diisocyanate. Suitable aromatic diisocyanate reaction components include those that have no intervening aliphatic moiety located on a direct path between the two isocyanate moieties. For particular embodiments, a direct path between the two isocyanate moieties (NCO) includes only aromatic ring members. For example, if the diisocyanate comprises two aromatic rings with one NCO attached to one of the aromatic rings and the other NCO attached to the other aromatic ring, then in order for there to be a direct path between the two NCO moieties, the rings may be either connected directly to one another or connected by another intervening aromatic ring.

An example of an aromatic diisocyanate component without such a direct path is 4,4'-methylene diphenyl diisocyanate (MDI), an industrially important and much used diisocyanate in the polyurethane industry but one that includes two aromatic rings linked by a methylene group. Such methylene group breaks the path between the NCO moieties that otherwise includes only aromatic ring members. Other examples of aromatic diisocyanates that lack the direct path linking the NCO moieties through the aromatic ring members include 4,4'-dibenzyl-diisocyante (DDBI, CAS n° 1034-24-8)

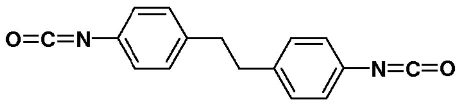

,

meta-tetramethyl-xylylene diisocyanate (TMXDI, CAS n° 2778-42-9).

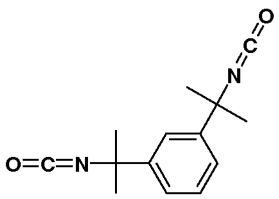

,

and

meta-xylylene diisocyanate (MPDI, CAS n° 3634-83-1)

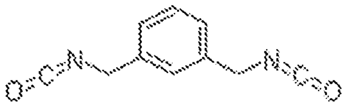

.

It is noted that one or more aliphatic moieties may be included as pendant groups or as side groups attached to any aromatic ring of the diisocyanate molecule. Such side groups are not part of the direct path between the NCO moieties.

Examples of suitable aromatic diisocyanates having a direct path between their NCO moieties that include only aromatic ring members include:

2,6-toluene diisocyanate (2,6-TDI, CAS n° 91-08-7),

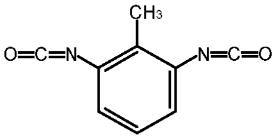

p-phenylene diisocyanate (PPDI, CAS n° 104-49-4),

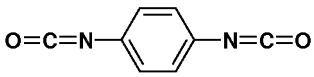

,

naphthalene-1,5- diisocyanate (NDI, CAS n° 3173-72-6),

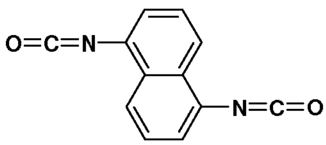

,

3,3'-dimethyl-4,4'-diphenyl diisocyanate, (TODI CAS n° 91-97-4),

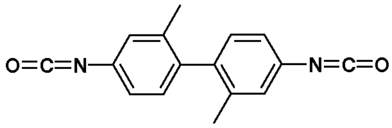

,

and

2,3,5,6-tetramethyl-1,4-diisocyanato-benzene (durene diisocyanate, CAS n° 719-61-9),

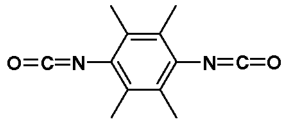

.

It is recognized that in some embodiments, mixtures of suitable aromatic diisocyanates may be useful and provide products having desired physical characteristics. In other embodiments, it is recognized that only one diisocyanate may be used in the polyurethane. In particular embodiments, the diisocyanate may be selected from PPDI, NDI, TODI, durene diisocyanate or combinations thereof. In particular embodiments, the diisocyanate is PPDI.

In particular embodiments the aromatic diisocyanates may further include the characteristic of being symmetrical. As is known to one having ordinary skill in the art, a symmetrical structure is one upon which a symmetry operation may be performed and the result is a configuration of the structure that is indistinguishable from, and superimposable on, its original configuration. Therefore a molecule is symmetrical if symmetry operations performed upon it with respect to known symmetry elements results in such an indistinguishable form. The known symmetry elements are lines, planes or points in or through the molecule about which the symmetry operations of rotation (< 360°) and/or reflection may be performed as known to those having ordinary skill in the art.

While not limiting the invention, it is thought that the symmetrical diisocyanates and/or those having direct path that includes only aromatic ring members between the two isocyanate moieties (NCO) are more "stackable", thereby providing the improved properties of particular embodiments of the non-pneumatic tires having support structures comprising at least in part such polyurethanes.

In particular embodiments it is recognized that the polyurethane reaction components may have no more than 10 wt% (based on total weight of the isocyanates) or alternatively no more than 5 wt% or 0 wt% of an isocyanate that is not an aromatic diisocyanate having a direct path between their NCO moieties that include only aromatic ring members. In particular embodiments it is further recognized that the polyurethane reaction components may have no more than 10 wt% (based on total weight of the diisocyanates) or alternatively no more than 5 wt% or 0 wt% of an aromatic diisocyanate that is not symmetrical. In particular embodiments it is further recognized that the polyurethane reaction components may have no more than 10 wt% (based on total weight of the diisocyanates) or alternatively no more than 5 wt% or 0 wt% total of aromatic diisocyanates selected from those that are not symmetrical, do not have a direct path between their NCO moieties that include only aromatic ring members or combinations thereof.

In addition to the aromatic diisocyanate, an additional reaction component of the prepolymer is the long-chain active hydrogen component, which may be a polyol, a polyamine or combinations thereof. As noted previously, it is these long-chain active hydrogen components provided as the reaction component for the prepolymer that produces the soft blocks in the resulting polyurethane material.

Suitable active hydrogen components in particular embodiments contain at least two isocyanate-reacting functional groups, *e.g.,* hydroxyl, amine or combinations thereof, attached to a single molecule. In particular embodiments the functionality of the active hydrogen components may be between 1.8 and 3.5 or alternatively between 2 and 3. In particular embodiments, the active hydrogen component may be a hydroxyl-terminated polyol, an amino-terminated

polyamine or combinations thereof.

The active hydrogen components suitable for use as a prepolymer reaction component may, for some embodiments, have a number-average molecular weight of between 1000 and 6000 or alternatively between 1000 and 4000, between 1000 and 3000, between 1000 and 2500, between 1500 and 6000, between 1500 and 5000, between 1500 and 3500, between 1500 and 2500, between 2000 and 6000, between 2000 and 5000 or between 2000 and 3000. Number average molecular weights may be determined by gel permeation chromatography (GPC) based on the ASTM D5296 method.

Examples of suitable polyol reaction components useful in particular embodiments of the prepolymer include polyether polyols, amine-terminated polyethers, polyester polyols, polyester ether polyols, castor oil polyols, polycyclic polyols and polycarbonate polyols. Polyether polyols include polytetramethylene ether glycol (PTMEG), polypropylene oxide glycol (PPO) and polybutylene oxide glycol (PBO). Amine-terminated polyols are based on polyether glycols that have had the terminal hydroxyl groups replaced by primary or secondary amino functionalities. The polyester polyols include, for example, polyethylene adipates, polyethyleneglycol adipates, polycaprolactone diols, and polycaprolactone-polyadipate copolymer diols. Many other polyols and polyamines are available and may be used as known to those skilled in the art. A suitable polyol reaction component may include mixtures of any two or more polyols including any two or more combinations of those mentioned above. In particular embodiments the PTMEG available e.g., from Invista as TERATHANE 2000, having a number-average molecular weight of 2000 (1900-2100), is useful as the polyol as well as any of the other TERATHANE PTMEG products having suitable molecular weights, including, for example, TERATHANE 1000 (950-1050), 1400 (1350-1450), 1800 (1700-1900), and 2900 (2825-2976) and combinations thereof.

The amount of diisocyanate and the long-chained active hydrogen component added as reactive components of the prepolymer are sufficient to provide an NCO:OH ratio (or the ratio of NCO to the isocyanate-reacting functional groups) of at least 1.8:1 or alternatively, between 1.8:1 and 3:1 or between 2:1 and 3:1. In particular embodiments, these ratios may be increased if the resulting residual diisocyanate monomer content of the prepolymer can be reduced to the suitable levels disclosed above by distillation or by other means.

The selection of the long-chained active hydrogen component when mixed with a suitable diisocyanate provides acceptable levels of the NCO content in the prepolymer. For particular embodiments, the NCO content of the prepolymer may be between 2 wt% and 6 wt% or alternatively between 2.5 wt% and 5.5 wt% or between 3 wt% and 5 wt%.

Curatives are mixed with the prepolymer to provide the final polyurethane product and, with the isocyanate moieties, form the hard segments of the polyurethane product. Suitable curatives for particular embodiments of the polyurethanes disclosed herein include any known curatives to those skilled in the art including those terminated with an hydroxyl functional group, those terminated with an amine functional group and combinations thereof. A suitable curative or chain extender for particular embodiments of the polyurethanes include those having a number average molecular weight of between 40 and 300 or alternatively, between 40 and 250 or between 50 and 175. In some embodiments, the curative may be limited to a maximum of 20 carbon atoms or alternatively, a maximum of 15 or a maximum of 8.

In particular embodiments, the curative is an aliphatic curative that may be characterized as being a dialcohol, a diamine or combinations thereof. Examples of suitable curatives include, for example, 1,2-ethanediol, 1,2-propanediol, 1,4-butanediol, ethylene diamine, 1,2-propane diamine, propylene diamine, propylenediol and combinations thereof.

In particular embodiments the curative may be, for example, 1,2-ethanediol, 1,2-propanediol, 1,3-propanediol, 1,2-butanediol, 1,3-butanediol, 1,4-butanediol, 1,2-butanediamine, 1,3-butanediamine, 1,4-butanediamine, ethylene diamine, 1,2-propane diamine, 1,2-propylenediol, bis-(2-hydroxyethyl)-hydroquinone (HQEE), 4,4'-diamino-diphenylsulfone (DAPSONE), N,N'-diisobutyl-paraphenylene diamine (Unilink 4100 from Dorf-Ketal), methylene-bis (3,3'diisopropyl)diphenylamine, (Lonzacure MDIPA from Lonza), methylene-bis (3,3'-diethyl) diphenylamine (Lonzacure MDEA from Lonza), 4,4'-methylene *bis*-(3-chloro-2,6-diethylaniline) (Lonzacure MCDEA from Lonza), 4,4' -methylene bis(2-chloroaniline) (MOCA), the 1:3 NaCl salt of 4,4'-diaminodiphenylmethane diamine (Duracure C3 from Chemtura Corp.), diethylthiotoluene-diamine (DETDA) and dimethylthio-toluenediamine (DMTDA). A suitable curative is available commercially from Albemarle Corporation as ETHACURE 300, which comprises DMTDA and has a reported molecular weight of 214 g/mol. In particular embodiments the curative is selected from 1,2-ethanediol, 1,3-propanediol, 1,4-butanediol and combinations thereof.

In particular embodiments the polyurethane is limited to only those embodiments that are formed with reactive components that include no amine reactive groups, *i.e.,* only reactive components having OH groups as the isocyanate-reacting functional groups such as, for example, diols and polyols.

Particular embodiments of the elastomeric polyurethanes disclosed herein may be characterized as having a tan delta at 20 °C of less than 0.06 or alternatively less than 0.05, less than 0.03 or less than 0.02 as measured over a temperature sweep in accordance with ISO 6721-4. This low tan delta may, in particular embodiments, be combined with a tensile modulus at 23 °C of between 10 MPa and 100 MPa or alternatively, between 30 MPa and 100 MPa at 10% strain in accordance with ASTM D412.

Particular embodiments of the polyurethanes may include other components as known to those having ordinary skill in the art. Such components may include, for example, catalysts, colorants, stabilizers against heat and/or UV

radiation, antioxidants and combinations thereof. In particular embodiments disclosed herein benzoyl chloride may be added in small quantities (typically less than 500 ppm based on the final amount of prepolymer) to the prepolymer to stabilize the product and to prevent unwanted side reactions such as allophanate, biuret and trimer formation.

The disclosed polyurethane material is useful to form at least a part of the non-pneumatic support structure. FIG. **1** is a schematic view of an exemplary structurally supported, non-pneumatic tire. The non-pneumatic tire **100** includes a plurality of tension transmitting elements, illustrated as web spokes **150**, extending transversely across and inward from an annular band **110**. A mounting band **160** is disposed at the radially inner end of the web spokes and an interface band **170** is disposed at the radially outer end of the web spokes. The hub mounting band **160** anchors the tire **100** to a hub **10** and the interface band **170** anchors the annular band **110** to the web spokes **150**. The hub **10** provides the mount of the non-pneumatic tire **100** to, *e.g.,* a vehicle. A tread portion **105** is formed at the outer periphery of the annular band **110** and may include, *e.g.,* grooves or ribs thereon. The support structure of the exemplary non-pneumatic tire embodiment disclosed in FIG. **1** includes the annular band **110**, the tension transmitting elements **150** and the hub **10**.

As is known in the art, particular embodiments of the non-pneumatic tire provide that the annular band comprises one or more sets of reinforcements that are radially spaced apart by elastomeric material to form the shear layer between sets of reinforcements. In particular embodiments, such as disclosed in US Patent No. 7,201,194, the shear band comprises a first membrane adhered to the radially inward extent of the shear layer and at least a second membrane adhered to the radially outer extent of the shear layer. Though not illustrated in FIG. **1**, it is recognized by those having ordinary skill in the art that the annular band **110** comprises the shear layer having the first and second membranes adhered to its radially outer extent and its radially inner extent.

In particular embodiments of a non-pneumatic tire, the reinforced annular band supports a load on the tire. As indicated in FIG. **1**, a load L placed on the tire axis of rotation X is transmitted by tension in the set of supports to the annular band, *e.g.,* the web spokes **150** and the annular band **110**. Non-pneumatic tires disclosed herein having such support arrangements are known as "top-loaders" since the load is largely supported by the reinforced annular band transmitted by tension in the set of supports. In particular embodiments of such top-loaders as shown in FIG. **1**, the region A includes supports that are in tension while the supports in the ground-contacting region C and the transition region B are not in tension. In contrast other non-pneumatic tires may be "bottom-loaders," wherein the load is supported essentially by compression of the supports between the annular band and the hub. Those bottom-loader types of non-pneumatic tires typically lack the reinforced shear band that can support the tire as a top-loader.

It is also expected that those having ordinary skill in the art will appreciate that the set of supports extending between the hub and radially inward from the outer reinforced annular band may take many different forms. While the web spokes of FIG. 1 are illustrated as being aligned both in the radial and axial direction, they are not limited to that arrangement. Indeed the tension transmitting elements may be of any form and arrangement suitable for top-loader non-pneumatic tires wherein a load L placed on the tire axis of rotation is transmitted by tension in the set of supports to the annular band. Such supports may be curved or straight, they may extend across the full width of the tire or only a part of the width, they may intersect with one or more other supports, *e.g.,* as in an X pattern, a V pattern or in a honeycomb pattern and so forth.

In particular embodiments, for example as shown in FIG. **2A**, the set of supports may be oriented in a repeating X pattern as seen in the axial direction, with pairs of supports forming the X joined at the centers. In FIG. **2B**, the supports are oriented in a zigzag pattern relative to the radial direction. The supports in FIG. **2C** are oriented with adjacent supports oppositely oriented relative to the axial direction in a zigzag pattern.

Other exemplary alternative arrangements may include, as shown in FIG. **2D**, the supports arranged in a chevron or v-pattern as viewed in the radial direction. Alternatively as shown in FIG. **2E**, the orientation of the supports may be alternated between axially aligned and circumferentially aligned.

In particular embodiments of the non-pneumatic tire disclosed herein, the disclosed polyurethane material may be useful for manufacturing the tension transmitting elements, the hub mounting band, the interface band, the annular band, the hub and combinations thereof. For example, the hub, the tension transmitting elements and the interface band may be molded together with the same polyurethane. In such embodiments, the tension transmitting elements are integral with the hub and therefore a hub mounting band may be eliminated. In other embodiments, the annular band and the tension transmitting elements may be molded of the same polyurethane. In such embodiments, the reinforcements may be placed in the mold in known manner and then the polyurethane may be added to the mold to form the supports and to form the reinforced shear band around the reinforcements from the same polyurethane. In such embodiments the supports are integral with the annular shear band.

As those having ordinary skill in the art would recognize, the tension transmitting elements may be integral with the hub and/or the reinforced annular band or not. In those embodiments in which they are integral, the tension transmitting elements are directly attached or bonded to the hub and/or reinforced annular band. In those embodiments in which they are not integral, then an interface exists, such as the hub mounting band and/or the interface band and/or other surfaces that provide an attachment or bonding interface between the tension transmitting elements and the reinforced annular band and the hub.

Particular embodiments of the non-pneumatic tire having a support structure formed at least in part with the polyurethane disclosed herein may be manufactured by several alternative means. In one exemplary method the shear layer, web spokes and hub may be made of the same material, for example the polyurethane, and can be manufactured by a molding process to produce the non-pneumatic tire. An alternative means comprises manufacturing the annular shear band and hub as separate articles, and then forming the complete article by molding the structures extending from the annular band to the bug in a mold that uses the annular band as the radially outer surface and the hub as the radially inner surface. This method allows the designer to specify different materials for the annular band and for the web spokes. For the exemplary article disclosed in U.S. Pat. No. 7,201,194, the annular band comprises a rubber shear layer and includes an outer tread portion that is constructed and then vulcanized as a unit by conventional means known in the tire industry. The annular band and the hub are placed in a mold, where the mold cores and profiles define the geometry of the spokes for the finished article.

A common molding technique used for articles having axisymmetric elements (the annular band and the hub) and essentially radial elements (the web spokes) is to use a centrifugal casting method where the mold rotates at a given rotation speed and the material to be molded is poured into the mold near the axis of rotation of the mold. In an exemplary method, the polyurethane elastomer is premixed, and then poured into the mold, allowed to cure, and then the finished article may be removed from the mold. The centripetal force created by the rotation of the mold produces a radial pressure gradient component in the liquid elastomer that facilitates complete filling of the mold to avoid molding deficiencies in the finished article. For an example where the mold rotates about a vertical axis of rotation, the centripetal pressure gradient component combines with a gravitational pressure gradient component. Upon setting, the polyurethane will have been molded to form the hub mounting band and the outer mounting band with the support structures molded therebetween. The hub mounting band becomes bonded to the hub and the annular band becomes bonded to the outer mounting band.

Alternatively, for example, the prepolymer and the curative may be mixed in known manner, for example, in an extruder and then extruded into a sheet that can be pelletized. The pellets can be bagged or otherwise stored and then later melted in an extruder, an injection molder or other thermoforming equipment as is known in the art for molding the desired support structure or other article by injection molding or other molding methods such as casting.

The invention is further illustrated by the following examples, which are to be regarded only as illustrations and not delimitative of the invention in any way. The properties of the compositions and articles disclosed in the examples were evaluated as described below and these utilized methods are suitable for measurement of claimed properties.

Tensile Modulus of Elongation (MPa) was measured at 10% elongation at a temperature of 23 °C in accordance with ASTM Standard D412 on dumb bell test pieces. These measurements are secant moduli in MPa, based on the original cross section of the test piece.

Breaking Stress (MPa) and Elongation at Break (%) were measured at a temperature of 23 °C in accordance with ASTM Standard D412 on dumb bell test pieces.

Shore A hardness of the compositions after curing were assessed in accordance with ASTM Standard D 2240-86.

The residual diisocyanate monomer content (wt%) of the prepolymer was measured by gel permeation chromatography (GPC) using a PL-GPC 50 instrument from Agilent Technologies fitted with a Mesopore 300 x 7.5 mm column from Agilent. The solvent was THF and UV detection at 254 nm was utilized. The instrument was calibrated using a fresh solution of the diisocyanate compound in THF.

The NCO content of the prepolymer (wt%) was determined by titration based on EN-ISO 11909 in which a measured amount of n-dibutyl amine solution was mixed with the prepolymer dissolved in toluene, which reacted with its NCO moieties. The excess unreacted amine was back-titrated with hydrochloric acid and a blank of the measured amount of amine was also titrated. %NCO was then determined as $[4.2\ (N_{HCl})\ (V_2\text{-}V_1)]\ /\ W$, wherein $N_{HCl}$ is the normality of the HCl, $V_2$ and $V_1$ in mL are the titrant volumes of the blank and the sample and W is the mass in grams of the prepolymer.

The dynamic properties (Tan Delta, E" and E') for the polyurethane compositions were measured as follows on a Metravib Model DMA450+ ViscoAnalyzer Test System in accordance with ISO 6721-4. First, the response of a parallelipipedic sample of material (10 mm distance between clamps, section 4.9 x 3mm) was recorded as it was being subjected to an alternating single sinusoidal shearing stress of 0.1% at a frequency of 10 Hz when heated from -120°C to +180°C at 2°C/min. The sample storage modulus E', loss modulus E" and Tan Delta were continuously calculated and recorded during this test.

The test was then repeated with a new sample of similar size under a controlled temperature of 23° C. Scanning was effected at an amplitude of deformation of 0.1 to 10 % (outward cycle) and then of 10 % to 0.1% (return cycle). The maximum value of the tangent of the loss angle tan delta (max tan $\delta$) was determined during the return cycle. From this test, Tan Delta and E' were calculated and recorded at 5% strain (outward and return) and 10% strain.

Example **1**

A prepolymer was prepared by first charging a 100L reactor equipped with a water jacket and paddle stirrer with 75.6 kg of PTMEG (2000 MW) polyol and 100 ppm of benzoyl chloride, which was added to reduce unwanted side reactions. 12 kg of PPDI flakes were suspended in the polyol via agitation and the temperature was then slowly raised to 85 °C and maintained for one hour while stirring continuously. The resulting prepolymer was a colorless liquid having 3.7 wt% of NCO measured after 24 hours, a viscosity of 6500 mPa.s at 25 °C and 1.3 wt% free PPDI.

Example **2**

Three different polyurethanes were produced using the formulations shown in Table **1**. The prepolymers used in the formulations W1 and F1 were purchased and are available from Chemtura. Vibrathane® B836 is an MDI terminated polyether prepolymer and Adiprene® LFP950A is a PPDI terminated polyether prepolymer, both having the characteristics shown in Table **1**. The prepolymer used in the formulation F2 was the prepolymer produced in Example **1**.

The prepolymer was heated to 80 °C and mixed by hand with the BDO curative in the amounts shown in Table **1**. After mixing, the material was poured into sheets and cured at 110 °C for 16 hours. The cured polyurethanes were then tested in accordance with the procedures described above and the results of the testing are provided in Table **2**.

Table **1** - Formulations

| | **W1** | **F1** | **F2** |
|---|---|---|---|
| **Components** | | | |
| Prepolymer Source | Vibrathane® B836 | Adiprene® LFP950A | Example 1 |
| Diisocyanate | MDI | PPDI | PPDI |
| % Residual Monomer, wt% | 22 | < 0.1 | 1.3 |
| % NCO, wt% | 8.7 | 5.5 | 3.3 |
| BDO Concentration, g/100 g prepolymer | 9.5 | 6.0 | 3.5 |

Table **2** - Physical Properties of the Formulations

| | **W1** | **F1** | **F2** |
|---|---|---|---|
| **Physical Properties** | | | |
| Tensile Mod. (ME10%) @ 23 °C, MPa | 29.3 | 88.4 | 33.4 |
| Breaking Stress @ 23 °C, MPa | 39.9 | 60.6 | 41.6 |
| Elongation at Break @ 23 °C | 719 | 1004 | 1119 |
| Shore A Hardness | 93A | 92.5A | 97A |
| Tan Delta, 20 °C | 0.079 | 0.023 | 0.012 |
| Tensile Stg. Mod. E' @ 20 °C, MPa | 51 | 145 | 63 |
| Tensile Stg. Mod. E' @ 100 °C, MPa | 90 | 163 | 70 |
| Delta E' at 20 °C and E' @ 100 °C, MPa | -39 | -18 | -7 |
| Max Tan delta at 23 °C under strain return 5 % | 0.09 | 0.14 | 0.05 |

As shown in the results, the storage modulus of the inventive compositions F1 and F2 were more stable over the temperature range of 20 °C and 100 °C than the witness with the Delta E' being -18 and -7 MPa respectively for F1 and F2 and -39 MPa for W1. The tan delta at 20 °C was also improved in formulations F1 and F2 as compared to the witness W1.

Example **3**

In this example, non-pneumatic tires were produced using the polyurethane formulations W1 and F2 shown in

Table **1**. For each of these polyurethanes, the prepolymer was charged to tank A of a four-component low pressure casting machine (StateMix, Ltd. of Canada) and heated to 80 °C. Tank B of the same machine was loaded with 1,4-butanediol at 45 °C. The two components were then each pumped at 25 g/sec through a low pressure mix head utilizing a toothed rotor operating at 6900 RPM and toothed stator to formulate the polyurethane W1 from the Vibrathane®B836 prepolymer and the polyurethane F2 from the prepolymer made in Example **1**.

The mixed reactants flowed from the casting machine to the non-pneumatic tire support mold that was rotating at 100 RPM about its vertical axis. The mold contained the annular shear band and hub prior to charging the mold with the polyurethane reactants so that the spokes and the inner and outer containment rings were molded from the resulting polyurethane, bonding to the hub and annular shear band. The resulting non-pneumatic tire was similar to that shown in FIG. **1** having web spokes extending from the hub towards the shear band. The tires were 10 x 3 inches (254 x 76.2 mm). The mold temperature was 100 °C for the MDI based tire and at 120 °C for the PPDI based tire. The tires were removed from their molds after 30 minutes and further cured at 110 °C for an additional 16 hours.

Example **4**

The 10 x 3 inches (254 x 76.2 mm) non-pneumatic tires produced in Example **3** were then tested on a 550 mm diameter road wheel to determine their rolling resistance and longevity. The tests were conducted at a nominal speed of 10 kph and a load of 90 kg. During the testing, the free rolling torque and radius were measured to determine the rolling resistance and longevity of the tire.

By measuring the torque under load, the recorded torque values can be directly converted to rolling resistance (RR) using the following equation:

$$RR = 1000\,\tau / L,$$

wherein RR is rolling resistance in kg/ton, $\tau$ is torque in Nm and L is load in kg. For this procedure, the average torque and load values were determined during early stage testing once the test had stabilized. In this case the data was collected and averaged over a five hour period between the five hour and ten hour testing segment.

By monitoring the non-pneumatic tire radius under load, the time to failure (longevity) was determined from the percent deflection calculated using the following equation:

$$D = -100\,(R_{loaded} - R_{unloaded}) / R_{unloaded}\,,$$

wherein D is percent deflection and R is the radius of the tire when unloaded and loaded. Upon failure the difference $R_{loaded}$ - $R_{unloaded}$ shoots up very quickly, over just a few minutes, and the time to failure was recorded as the tire lifetime.

The testing results are provided in Table **2** as the average of two non-pneumatic tires tested with each of the two polyurethane materials.

Table **2** - Tire Results

| | **W1** | **F2** |
|---|---|---|
| Avg. Torque, Nm | 1.5 | 0.8 |
| Avg. Load, kg | 90 | 90 |
| Avg. RR, kg/ton | 16.3 | 9.0 |
| Longevity, hours | <72 | >198 |

As demonstrated by the tire test results, the non-pneumatic tires having support structure manufactured from the F1 polyurethane exhibited significantly improved rolling resistance and longevity.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only

one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

It should be understood from the foregoing description that various modifications and changes may be made to the embodiments of the present invention without departing from its true spirit. The foregoing description is provided for the purpose of illustration only and should not be construed in a limiting sense. Only the language of the following claims should limit the scope of this invention.

## Claims

1. A non-pneumatic tire (100) having a support structure comprising an outer reinforced annular band (110), a hub (10) and a set of tension transmitting elements extending between the hub (10) and radially inward from the outer reinforced annular band (110), the support structure formed at least in part of a polyurethane that is a reaction product of reaction components, the reaction components comprising:

   a prepolymer comprising a reaction product of an aromatic diisocyanate monomer and an active hydrogen component selected from a polyol having hydroxyl isocyanate-reacting functional groups, a polyamine having amine isocyanate-reacting functional groups or combinations thereof, the aromatic diisocyanate monomer and the active hydrogen component mixed at a ratio of NCO to the isocyanate-reacting functional groups of at least 1.8:1, wherein the active hydrogen component has a number average molecular weight of between 1000 and 6000 and wherein the prepolymer contains no more than 10 wt% of residual aromatic diisocyanate monomer; and a curative.

2. The non-pneumatic tire (100) of claim 1, wherein an NCO content of the prepolymer is between 2 wt% and 6 wt%.

3. The non-pneumatic tire (100) of claim 1 or claim 2, wherein a direct path between the two isocyanate moieties of the aromatic diisocyanate monomer molecule includes only aromatic ring members.

4. The non-pneumatic tire (100) of any of the preceding claims, wherein the aromatic diisocyanate monomer molecule is symmetrical.

5. The non-pneumatic tire (100) of any of the preceding claims, wherein the aromatic diisocyanate is selected from PPDI, NDI, TODI, durene diisocyanate or combinations thereof.

6. The non-pneumatic tire (100) of any of the preceding claims, wherein the aromatic diisocyanate is selected from PPDI.

7. The non-pneumatic tire (100) of any of the preceding claims, wherein the active hydrogen component comprises isocyanate-reacting functional groups with a functionality of between 1.8 and 3.5.

8. The non-pneumatic tire (100) of claim 7, wherein the functionality is between 2 and 3.

9. The non-pneumatic tire (100) of any of the preceding claims, wherein the active hydrogen component has a number average molecular weight of between 1500 and 5000.

10. The non-pneumatic tire (100) of any of the preceding claims, wherein the active hydrogen component is PTMEG.

11. The non-pneumatic tire (100) of any of the preceding claims, wherein the curative is an aliphatic terminated with a hydroxyl function, an amine function or combinations thereof and has a molecular weight of between 40 and 300.

12. The non-pneumatic tire (100) of claim 11, wherein the curative is a diol, a diamine or combinations thereof.

13. The non-pneumatic tire (100) of claim 12, wherein the curative is selected from 1,2-ethanediol, 1,2-propanediol, 1,4-butanediol or combinations thereof.

14. The non-pneumatic tire (100) of claim 13, wherein the aliphatic chain extender is 1,4-butanediol.

**15.** The non-pneumatic tire (100) of any of the preceding claims, wherein the prepolymer contains no more than 7 wt% of residual aromatic diisocyanate monomer.

**16.** The non-pneumatic tire (100) of claim any of the preceding claims, wherein the polyurethane forms the set of tension transmitting elements.

**17.** The non-pneumatic tire (100) of claim 16, wherein the set of tension transmitting elements are web spokes (150) aligned radially between the hub (10) and the outer annular band (110).

**18.** The non-pneumatic tire (100) of any one of the preceding claims, wherein the set of tension transmitting elements are integral with the hub (10).

**Patentansprüche**

**1.** Nicht-pneumatischer Reifen (100) mit einer Stützstruktur, die ein äußeres verstärktes ringförmiges Band (110), eine Nabe (10) und einen Satz von spannungsübertragenden Elementen umfasst, die sich zwischen der Nabe (10) und radial nach innen vom äußeren verstärkten ringförmigen Band (110) aus erstrecken, wobei die Stützstruktur zumindest teilweise aus einem Polyurethan gebildet ist, das ein Reaktionsprodukt von Reaktionskomponenten ist, wobei die Reaktionskomponenten umfassen:

ein Vorpolymer, das ein Reaktionsprodukt eines aromatischen Diisocyanat-Monomers und einer aktiven Wasserstoffkomponente enthält, die ausgewählt ist aus einem Polyol, das mit Hydroxylisocyanat reagierende Funktionsgruppen aufweist, einem Polyamin, das mit Amin-Isocyanat reagierende Funktionsgruppen aufweist, oder Kombinationen derselben, wobei das aromatische Diisocyanat-Monomer und die aktive Wasserstoffkomponente in einem Verhältnis von NCO zu den mit Isocyanat reagierenden Funktionsgruppen von mindestens 1,8:1 gemischt sind, wobei die aktive Wasserstoffkomponente ein zahlenmäßig mittleres Molekulargewicht zwischen 1000 und 6000 aufweist und wobei das Vorpolymer nicht mehr als 10 Gew.-% des verbleibenden aromatischen Diisocyanat-Monomers enthält; und
ein vulkanisierungsmittel.

**2.** Nicht-pneumatischer Reifen (100) nach Anspruch 1, wobei ein NCO-Gehalt des Vorpolymers zwischen 2 Gew.-% und 6 Gew.-% beträgt.

**3.** Nicht-pneumatischer Reifen (100) nach Anspruch 1 oder Anspruch 2, wobei ein direkter Pfad zwischen den beiden Isocyanatanteilen des aromatischen Diisocyanat-Monomermoleküls nur aromatische Ringglieder enthält.

**4.** Nicht-pneumatischer Reifen (100) nach einem der vorhergehenden Ansprüche, wobei das aromatische Diisocyanat-Monomermolekül symmetrisch ist.

**5.** Nicht-pneumatischer Reifen (100) nach einem der vorhergehenden Ansprüche, wobei das aromatische Diisocyanat ausgewählt wird aus PPD1, ND1, TOD1, Durendiisocyanat oder Kombinationen derselben.

**6.** Nicht-pneumatischer Reifen (100) nach einem der vorhergehenden Ansprüche, wobei das aromatische Diisocyanat aus PPD1 ausgewählt wird.

**7.** Nicht-pneumatischer Reifen (100) nach einem der vorhergehenden Ansprüche, wobei die aktive Wasserstoffkomponente mit Isocyanat reagierenden Funktionsgruppen mit einer Funktionalität zwischen 1,8 und 3,5 enthält.

**8.** Nicht-pneumatischer Reifen (100) nach Anspruch 7, wobei die Funktionalität zwischen 2 und 3 beträgt.

**9.** Nicht-pneumatischer Reifen (100) nach einem der vorhergehenden Ansprüche, wobei die aktive Wasserstoffkomponente ein zahlenmäßig mittleres Molekulargewicht zwischen 1500 und 5000 aufweist.

**10.** Nicht-pneumatischer Reifen (100) nach einem der vorhergehenden Ansprüche, wobei die aktive Wasserstoffkomponente PTMEG ist.

**11.** Nicht-pneumatischer Reifen (100) nach einem der vorhergehenden Ansprüche, wobei das Vulkanisierungsmittel

ein Aliphat ist, der mit einer Hydroxylfunktion, einer Aminfunktion oder Kombinationen derselben abgeschlossen ist und ein Molekulargewicht zwischen 40 und 300 aufweist.

**12.** Nicht-pneumatischer Reifen (100) nach Anspruch 11, wobei das Vulkanisierungsmittel ein Diol, ein Diamin oder Kombinationen derselben ist.

**13.** Nicht-pneumatischer Reifen (100) nach Anspruch 12, wobei das Vulkanisierungsmittel aus 1,2-Ethandiol, 1,2-Propandiol, 1,4-Butandiol oder Kombinationen derselben ausgewählt wird.

**14.** Nicht-pneumatischer Reifen (100) nach Anspruch 13, wobei der aliphatische Kettenverlängerer 1,4-Butandiol ist.

**15.** Nicht-pneumatischer Reifen (100) nach einem der vorhergehenden Ansprüche, wobei das Vorpolymer nicht mehr als 7 Gew.-% des verbleibenden aromatischen Diisocyanat-Monomers enthält.

**16.** Nicht-pneumatischer Reifen (100) nach einem der vorhergehenden Ansprüche, wobei das Polyurethan den Satz von spannungsübertragenden Elementen bildet.

**17.** Nicht-pneumatischer Reifen (100) nach Anspruch 16, wobei der Satz von spannungsübertragenden Elementen Stegspeichen (150) bildet, die radial zwischen der Nabe (10) und dem äußeren ringförmigen Band (110) ausgerichtet sind.

**18.** Nicht-pneumatischer Reifen (100) nach einem der vorhergehenden Ansprüche, wobei der Satz von spannungsübertragenden Elementen mit der Nabe (10) verblockt ist.

**Revendications**

**1.** Bandage non-pneumatique (100) présentant une structure de support comprenant une bande annulaire extérieure (110) renforcée, un moyeu (10) et un ensemble d'éléments de transmission de tension s'étendant entre le moyeu (10) et radialement vers l'intérieur depuis la bande annulaire extérieure (110) renforcée, la structure de support étant formée au moins en partie en un polyuréthane qui est un produit réactionnel de composants réactionnels, les composants réactionnels comprenant :

un prépolymère comprenant un produit réactionnel d'un monomère diisocyanate aromatique et un composant hydrogène actif sélectionné parmi un polyol présentant des groupes fonctionnels réagissant avec l'hydroxyle et l'isocyanate, une polyamine présentant des groupes fonctionnels réagissant avec l'amine et l'isocyanate ou des combinaisons de ceux-ci, le monomère diisocyanate aromatique et le composant hydrogène actif étant mélangés dans un rapport de NCO aux groupes fonctionnels réagissant avec l'isocyanate d'au moins 1,8:1, dans lequel le composant hydrogène actif présente un poids moléculaire moyen en nombre compris entre 1000 et 6000 et dans lequel le prépolymère ne contient pas plus de 10 % en poids de monomère diisocyanate aromatique résiduel ; et
un agent de durcissement.

**2.** Bandage non-pneumatique (100) selon la revendication 1, dans lequel une teneur en NCO du prépolymère est comprise entre 2 % en poids et 6 % en poids.

**3.** Bandage non-pneumatique (100) selon la revendication 1 ou la revendication 2, dans lequel un trajet direct entre les deux fractions d'isocyanate de la molécule de monomère diisocyanate aromatique inclut seulement des éléments cycliques aromatiques.

**4.** Bandage non-pneumatique (100) selon l'une quelconque des revendications précédentes, dans lequel la molécule de monomère diisocyanate aromatique est symétrique.

**5.** Bandage non-pneumatique (100) selon l'une quelconque des revendications précédentes, dans lequel le diisocyanate aromatique est sélectionné parmi le PPDI, le NDI, le TODI, le diisocyanate de durène ou des combinaisons de ceux-ci.

**6.** Bandage non-pneumatique (100) selon l'une quelconque des revendications précédentes, dans lequel le diisocyanate aromatique est sélectionné parmi le PPDI.

7. Bandage non-pneumatique (100) selon l'une quelconque des revendications précédentes, dans lequel le composant hydrogène actif comprend des groupes fonctionnels réagissant avec l'isocyanate avec une fonctionnalité entre 1,8 et 3,5.

8. Bandage non-pneumatique (100) selon la revendication 7, dans lequel la fonctionnalité est comprise entre 2 et 3.

9. Bandage non-pneumatique (100) selon l'une quelconque des revendications précédentes, dans lequel le composant hydrogène actif présente un poids moléculaire moyen en nombre entre 1500 et 5000.

10. Bandage non-pneumatique (100) selon l'une quelconque des revendications précédentes, dans lequel le composant hydrogène actif est du PTMEG.

11. Bandage non-pneumatique (100) selon l'une quelconque des revendications précédentes, dans lequel l'agent de durcissement est un aliphatique terminé par une fonction d'hydroxyle, une fonction d'aminé ou des combinaisons de ceux-ci et présente un poids moléculaire entre 40 et 300.

12. Bandage non-pneumatique (100) selon la revendication 11, dans lequel l'agent de durcissement est un diol, une diamine ou des combinaisons de ceux-ci.

13. Bandage non-pneumatique (100) selon la revendication 12, dans lequel l'agent de durcissement est sélectionné parmi le 1,2-éthanediol, le 1,2-propanediol, le 1,4-butanediol ou des combinaisons de ceux-ci.

14. Bandage non-pneumatique (100) selon la revendication 13, dans lequel le diluant à chaîne aliphatique est du 1,4-butanediol.

15. Bandage non-pneumatique (100) selon l'une quelconque des revendications précédentes, dans lequel le prépolymère ne contient pas plus de 7 % en poids de monomère diisocyanate aromatique résiduel.

16. Bandage non-pneumatique (100) selon l'une quelconque des revendications précédentes, dans lequel le polyuréthane forme l'ensemble d'éléments de transmission de tension.

17. Bandage non-pneumatique (100) selon la revendication 16, dans lequel l'ensemble d'éléments de transmission de tension est constitué par des rayons en réseau (150) alignés radialement entre le moyeu (10) et la bande annulaire extérieure (110).

18. Bandage non-pneumatique (100) selon l'une quelconque des revendications précédentes, dans lequel l'ensemble d'éléments de transmission de tension est d'un seul tenant avec le moyeu (10).

FIG. 1

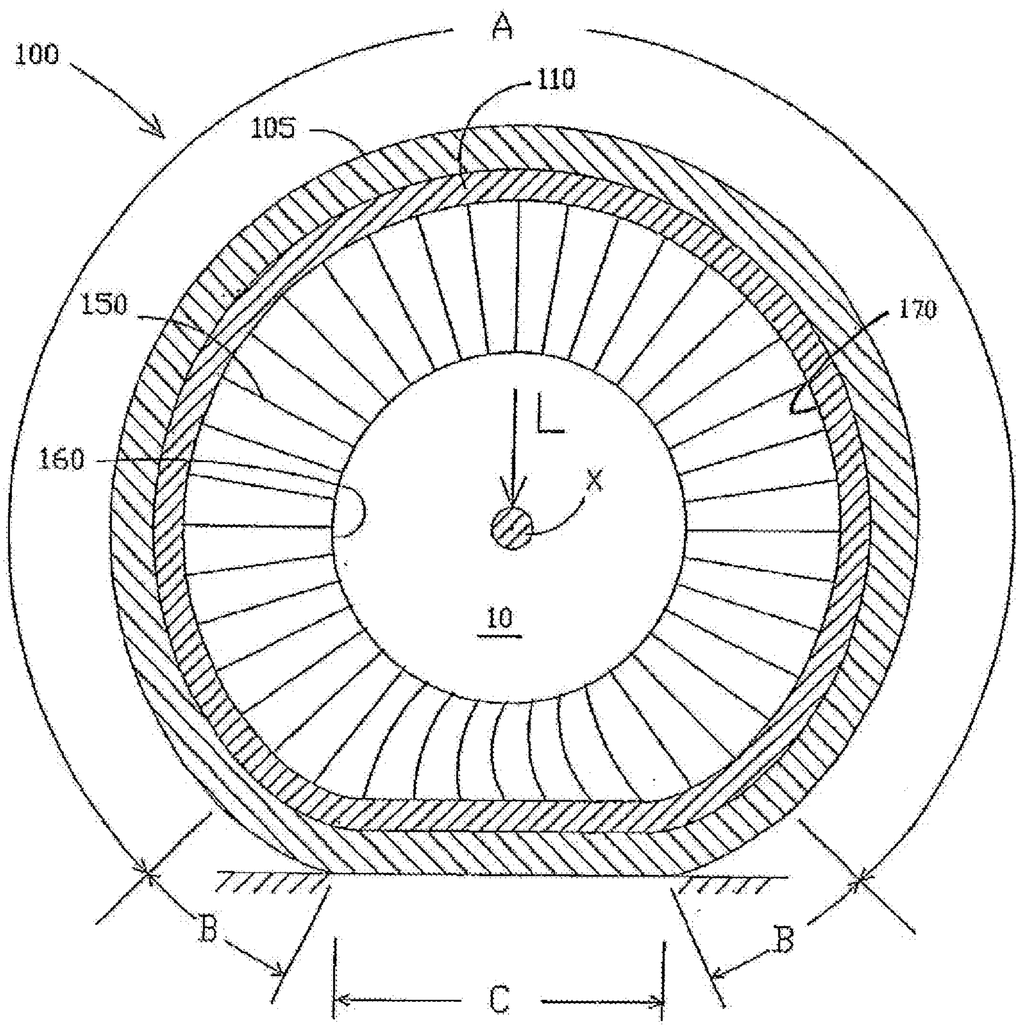

FIG. 2A

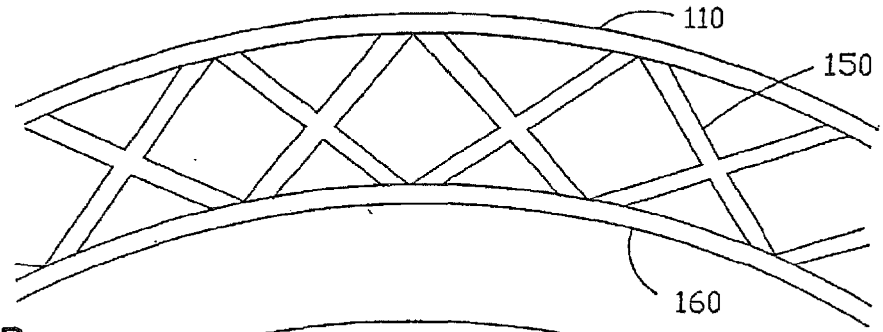


FIG. 2B

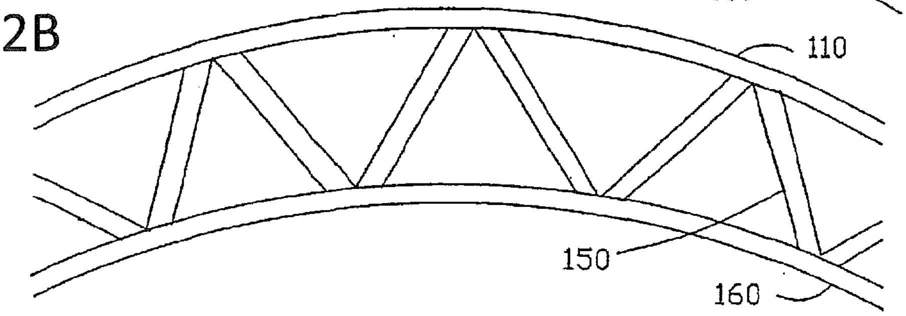


FIG. 2C

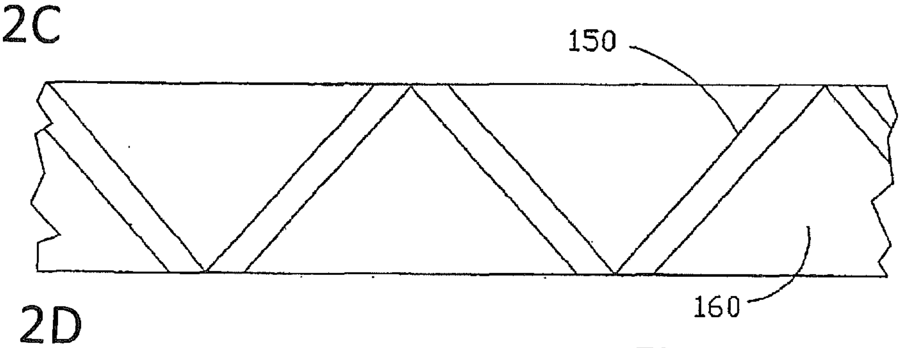


FIG. 2D

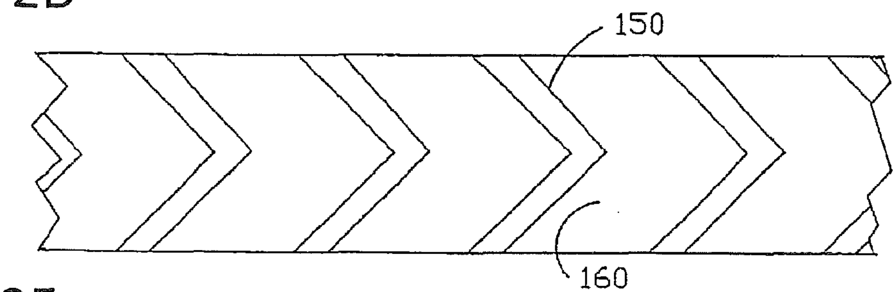


FIG. 2E

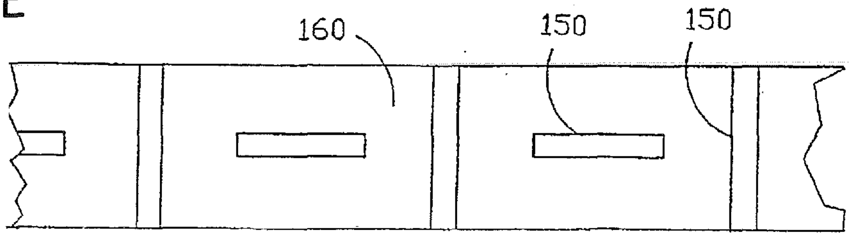

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7201194 B